# EUROPEAN PATENT APPLICATION

(11) **EP 0 978 779 A2**
(43) Date of publication of application: **09.02.2000**
(21) Application number: 99306176.1
(22) Date of filing: 03.08.1999
(51) Int. Cl.: G05G 1/06

(54) **Multiple input control**

(30) Priority: 03.08.1998 US 128384
(71) Applicant: Lear Automotive Dearborn, Inc., Southfield, Michigan 48086 (US)
(72) Inventor: Miller, Robin Mihekun, Ellington, Connecticut 06029 (US)
(74) Representative: Archer, Philip Bruce

(57) **Abstract**

An operator input device 20 is releasably attached to a shift handle 25 on a vehicle. The device 20 is provided with a plurality of input devices 26, 28, 33, 35, 37, 39 which may be actuated to control various systems on a vehicle. A hand rest 22 is releasable relative to a mount portion 24, and movable to a shifting position. When in the shifting position, the vehicle shift handle 25 can be shifted to change the transmission 27 state of the vehicle. However, the hand rest 22 is normally maintained in a position where it cannot shift. Preferably two release members 40, 54 must be both actuated to release the hand rest 22 and allow movement to the shifting position.

## Description

### BACKGROUND OF THE INVENTION

This application relates to a single input device that controls many functions on a vehicle.

Vehicles are being provided with more and more systems and optional features. In addition to functional systems which relate to the control and operation of the vehicle, new comfort and entertainment options are being provided. In addition, navigation systems, and other operator assistance systems are being incorporated into a vehicle.

On modern vehicles each of these different systems typically require a distinct input device for operation. Thus, as vehicles systems become more numerous and complex, the number of input devices increases accordingly.

In modern vehicles there are operator input devices spaced all about the cab. This requires a good deal of learning time for an operator to become adept at operating the vehicle. In addition, the positioning of the input devices at many locations within the cab does make it difficult to operate the vehicle as required without being distracted from the road.

In addition, when rental vehicles are utilized, an operator will have little or no familiarity with the location of control input devices.

For the reasons set forth above, it would be desirable to provide a single input device control.

### SUMMARY OF THE INVENTION

In a first embodiment of this invention, a shift handle such as provided in an automatic transmission to move the vehicle between park, forward and reverse locations, also receives an operator input device. The operator input device is preferably provided with a plurality of input devices such that the operator can control various systems and functions from this single input.

In another feature, the shift handle has a lock structure which may be actuated to allow the handle to be moved to a shifting position at which the operator may move the vehicle between neutral, park, drive and reverse, as known. Known shift handles are provided with a lock which prevents movement unless the lock is released. However, known locks are typically a single member with the inventive shift handle, the single lock may be accidentally actuated when the operator is manipulating input devices on the handle. Thus, the present invention preferably uses two separate locks which must both be actuated before the handle can be moved to the shifting position.

The lock structures preferably include one lock structure which is to be actuated by one finger and a second lock structure which is to be actuated by another finger. Preferably, the two lock structures require distinct movements to reduce the likelihood of accidental release. The "two distinct" movements could extend to arrangements wherein one of the locks is actuated by a device removed from the handle, such as a switch, etc. actuated by the other hand.

In preferred features of this invention, the handle is preferably provided with input devices for each of the several fingers, and a thumb input device. In addition, a rotating dial input device is also provided. In addition, other input devices such as one actuated by tilting the handle may be utilized. In this application "input device" can define a simple on/off switch or other input devices that can supply varying input.

In addition, the operator input device is preferably removable from the underlying shift member. In this way, the operator input device may be removed by an operator, such as when the operator enters a rental vehicle. The device can be provided with memory for the particular operator such that various components on the vehicle can be provided with desired memory positions for the operator.

These and other features of the present invention can be best understood from the following specification and drawings, the following of which is a brief description.

### BRIEF DESCRIPTION OF THE DRAWINGS

- Figure 1: shows an input device.
- Figure 2: is a top view of the device of Figure 1.
- Figure 3: is a side view of the Figure 1 input device.
- Figure 4: is a cross-sectional view.
- Figure 5: is another side view.
- Figure 6: is another cross-sectional view.
- Figure 7: shows a additional embodiment somewhat schematically.
- Figure 8: shows another embodiment somewhat schematically.
- Figure 9: shows another embodiment somewhat schematically.

### DETAILED DESCRIPTION OF A PREFERRED EMBODIMENT.

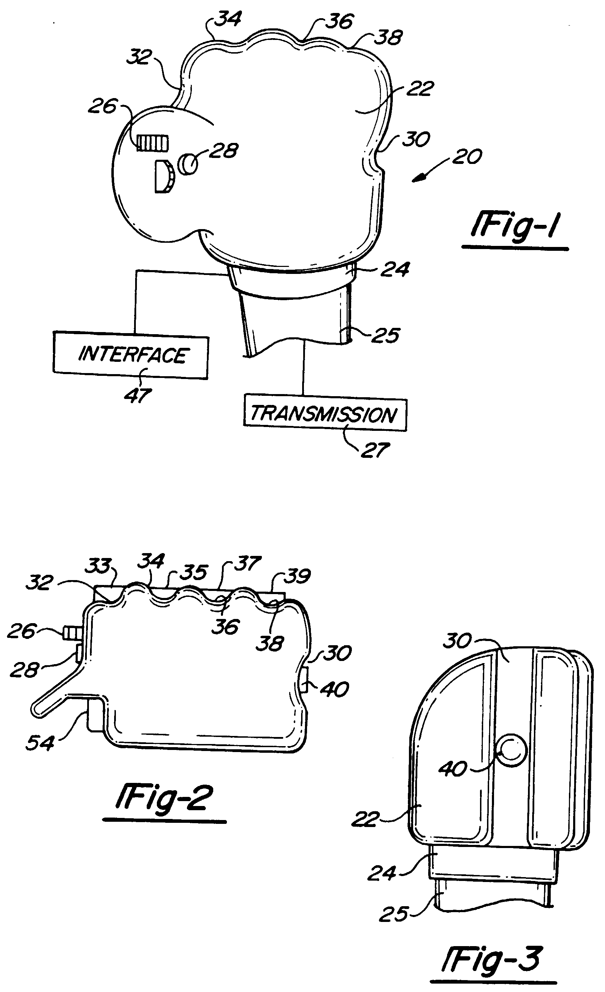

Figure 1 shows a shift input device 20 incorporating a hand rest portion 22, and a tubular mount portion 24. Tubular mount portion 24 is attached to a shifting handle 25. As shown at 27, handle 25 allows changing the transmission state, as known. The hand rest portion 22 is provided with several input devices which are easily accessible to an operator resting a hand on the rest portion 22. As an example, a rotary dial input device 26 and a thumb input device 28 are provided at one side of the hand rest portion 22. Valleys 30, 32, 34, 36 and 38 all may receive input devices, as will be explained below.

As shown in Figure 2, valley 32 can receive an input device 33, valley 34 receives an input device 35, valley 36 receives an input device 37 and valley 38 receives an input device 39. Input devices 33, 35, 37 and 39 can all be the type of input devices which are moved inwardly to provide a control signal. Dial input device 26 can be rotated about an axis within the hand rest portion 22. Thumb input device 28 is also provided.

In valley 30, a mechanism 40 is provided. Mechanism 40 is a finger release, and operates in conjunction with a thumb release 54. When releases 40 and 54 are both actuated, then the hand rest portion 22 and tubular portion 24 may rotate relative to the underlying portion 25. When this rotation occurs, a connecting structure within the handle 25 allows the shift between neutral, reverse, drive and park. The structure for allowing shifting in one position but locking shifting in the other position is as known in the art and forms no portion of this invention. It is the inclusion of the several operator control input devices into this handle, along with the provision of two safety interlocks which is inventive.

As an example, the input devices 33, 35, 37, 39, 26 and 28 can be utilized to control all operations on a vehicle. Thus, the input devices may be utilized to select from a display menu on a display panel position forwardly of the operator as to any one of several available options. Alternatively, the various input devices can have dedicated functions. The dial 26 will allow adjustment of levels, such as the audio volume or temperature. The controls and components necessary for allowing the input devices to change the functions on the vehicle are known. As shown in box 41 (Figure 1), the input devices communicate with a control interface for vehicle displays and system operation. It is the provision of these input devices into the hand rest, and the mounting of the hand rest onto the stick shift which is inventive in this application.

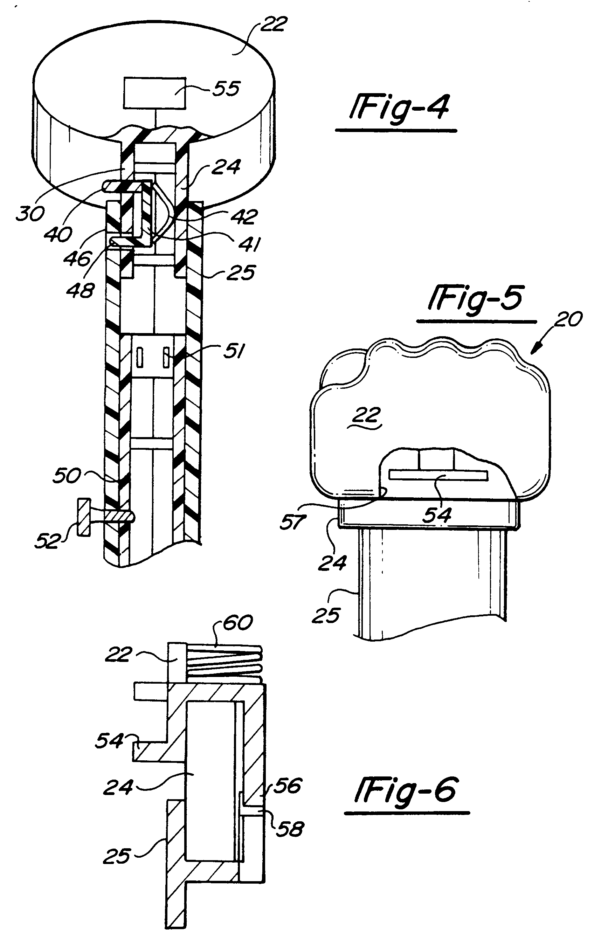

As shown in Figure 3, valley 30 receives mechanism 40. Figure 4 shows one way of locking the handle with mechanism 40. This is exemplary only, and any other mechanism can be used. Mechanism 40 can be pushed inwardly to guide a body portion 41 against the force of a spring 42. When the body portion 41 moves against the strength of a spring 42, an end portion 48 moves outwardly of an opening 46 in tube 25. This allows tube 24 and the hand rest 22 to rotate relative to the tube 25. Thus, the hand rest portion 22 will be able to rotate relative to the tube 25 to a position wherein shifting can occur.

As also shown in Figure 4, tube 25 may be attached to a lower tubular portion 50. Lower tubular portion 50 is preferably fixed to the vehicle. An attachment device 52 can secure tube 25 to tube 50. Attachment device 52, shown schematically, is preferably a quick release mechanism such as push button release mechanisms used on socket wrenches, boat rigging, etc. Portion 25 may be removed from portion 50, and carried with the operator. This allows the portion 22 and 25 to be attached to a tube 50 in any vehicle which is entered by the operator. The operator is provided an individually dimensioned and designed control 20 for use on any vehicle. A rental car may be provided with the ability to receive a device 22, 25 on a tube 50. An operator entering the rental car would simply place the device 22, 25 onto the tube 50 and secure it by attachment device 52.

A plug 51, such as shown schematically in Figure 4, would provide electrical communication between the two portions. Data transmission can also be accomplished through infrared transmission, radio, ultrasonics, optical or other methods known in the art. Memory 55 may be mounted within the hand rest 22. Thus, the operator entering the new vehicle would be able to attach the device 22, 25 to the underlying tube 50 and complete the connections through plug 51. Desired position for various vehicle components can then be transmitted from memory 55 to the vehicle interface 41.

Figure 5 shows a second interlock mechanism 54 which is positioned within a cutout portion 57 of the input device 20.

Figure 6 shows one possible embodiment of mechanism 54 which extends upwardly over a portion of the tubular member 24. Again, other mechanisms may be useful. The portion connects to an inside portion 56 which fits into a notch 58 in the mount tube 25. A spring 60 biases the portion 56 into notch 58. Now, when the mechanism 54 is not actuated, the portion 56 prevents relative rotation by being biased into notch 58. However, when the operator does wish to shift the transmission, mechanism 54 is moved upwardly against the force of spring 60, and portion 56 moves out of notch 58. The two tubes 24 and 25 may now rotate relative to each other.

In a most preferred embodiment, the interlock mechanisms 40 and 54 are both utilized. Since the two require movement in distinct directions, the likelihood of an operator inadvertently releasing both is low. Thus, it is unlikely that the vehicle equipped with this universal device will be accidentally moved out of a desired transmission state when the operator manipulates the several switches on the input module 20.

Figure 7 shows an embodiment 80 wherein the handrest portion 82 is mounted to the mount portion 84 through a socket connection 86. A spring connection, as known, may bias the portion 82 to a central rest position at which an input device outputs a nominal value (similar to a joystick). The operator may now pivot or rotate portion 82 such that input devices 88, and 90, shown schematically, attain different values based on their position. Alternatively, a force transducer may monitor how much force is applied, and translate that into a signal. As known in the art, these devices may be switches. This provides another switch function in the overall embodiment.

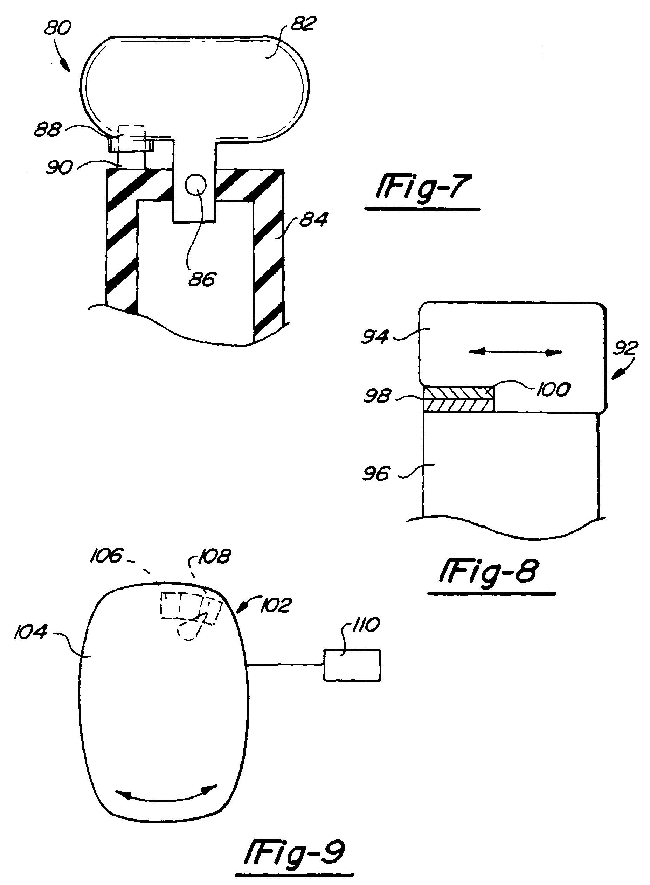

Figure 8 shows another embodiment 92 wherein the handrest portion 94 is guided, by guides not shown, such that it may translate relative to the mount portion 96. A liner input device 98 is selectively moved on the handrest portion to allow variable input to another circuit and provide another switch function.

Figure 9 shows an embodiment 102 wherein the handrest portion 106 is mounted, shown schematically, for limited rotary movement relative to its mount portion. In one function, a variable input device 106 formed on the mount portion 104 is selectively moved to provide a signal as described above. Alternatively, a force transducer 110 may monitor how much force is applied, and translate that into a signal.

Generally, the figure 7-9 embodiments are systems in which the entire handrest portion is movable relative to its mount portion to provide a signal. Generally, two input device members move relative to each other to provide a variable input. This function is shown somewhat schematically in Figures 7-9, but is well within the skill of a worker in this art.

Preferred embodiments of this application are shown. However, a good deal of the structure shown in this application is merely exemplary. Many modifications would be well within this invention, and a worker of ordinary skill in the art would recognize that those modifications would come within the scope of this invention. For that reason, the following claims must be studied to determine the true scope and content of this invention.

## Claims

1. An input device for a vehicle comprising:
a hand rest 22 including a plurality of input devices 26, 28, 33, 35, 37, 39, said input devices 26, 28, 33, 35, 37, 39 being operable to control functions and components on a vehicle, said hand rest being provided with a lower mount portion 24;
said lower mount portion 24 being removably mounted to a vehicle shift handle 25; and
said hand rest 22 including a locking mechanism 40, 54 for selectively locking the hand rest 22 relative to said mount portion 24 to prevent operation of said vehicle shift handle 25, and said locking mechanism 40, 54 being unlockable to release said hand rest 22 from said mount portion 24 for movement to a shift position wherein said hand rest 22 and said handle 25 can be moved to shift a transmission 27 associated with said vehicle.

2. A device as recited in Claim 1, wherein said locking mechanism 40, 54 comprises two separate members 40, 54 which lock said hand rest 22 relative to said mount portion 24.

3. A device as recited in Claim 2, wherein said two separate members 40, 54 must be moved in two distinct directions to release said hand rest 22.

4. A device as recited in Claim 3, wherein one of said lock members 40, 54 must be moved inwardly and the other of said lock members 40, 54 must be moved vertically to release said hand rest 22.

5. A device as recited in Claim 1, wherein said hand rest 22 is provided with at least one rotating dial input device 26.

6. A device as recited in Claim 1, wherein said hand rest 22 includes at least one of said input devices 28, 33, 35, 37, 39 associated with all five of a user's fingers.

7. A device as recited in Claim 1, wherein said mount portion 24 is removably attached to said vehicle shift handle 25 such that it may be removed from the vehicle shift handle and transferred to another vehicle.

8. A device as recited in Claim 7, wherein said hand rest 22 is provided with a memory 55 for storing desired parameters of a particular driver.

9. A device as recited in Claim 7, wherein the removable mount portion 24 allows the input devices 28, 33, 35, 37, 39 to be tailored to an individual user.

10. A device as recited in Claim 1, wherein a handrest portion 82 is movable relative to the mount portion 84 to provide a input device function.

11. A device as recited in Claim 10, wherein said handrest portion 82 pivots relative to said mount portion 84 to provide a variable signal.

12. A device as recited in Claim 10, wherein said handrest portion 94 moves linearly relative to said mount portion 96 to provide a variable signal.

13. A device as recited in Claim 10, wherein said handrest portion 104 is rotatable relative to said mount portion to provide a variable signal.

14. A method of operating a vehicle control module comprising the steps of:
(1) providing a shift input device 20 mounted on a shift handle 25 which is movable between several positions to shift a transmission 27 of a vehicle, providing a hand rest 22 of the shift input device 20 with a plurality of input devices 26, 28, 33, 35, 37, 39, and providing a locking mechanism 40, 54 for holding said hand rest 22 in a position wherein shifting cannot occur, said locking mechanism 40, 54 being operable to be moved to a release position wherein said hand rest 22 can be moved to a shifting position at which it allows shifting of the transmission 27;
(2) operating a vehicle and actuating said input devices 26, 28, 33, 35, 37, 39 on said hand rest 22; and
(3) actuating said locking mechanism 40, 54 to release said hand rest 22 and then shifting said transmission 27.

15. A method as recited in Claim 14, wherein said actuation of said locking mechanism 40, 54 includes moving two separate members 40, 54 in two distinct directions.

16. A method or apparatus for operating a vehicle control module comprising an input device such as an automatic transmission shift handle, the input device having a plurality of input devices such that an operator can control various systems and functions from this single input.
